# EUROPÄISCHE PATENTSCHRIFT

(11) **EP 3 681 765 B1**
(45) Veröffentlichungstag und Bekanntmachung des Hinweises auf die Patenterteilung: **07.07.2021**
(21) Anmeldenummer: 18773709.3
(22) Anmeldetag: 16.08.2018
(51) Int. Cl.: B60R 21/00, B60R 21/264

(54) **GASGENERATOR**
GAS GENERATOR
GÉNÉRATEUR À GAZ

(30) Priorität: 15.09.2017 DE 102017216384
(43) Veröffentlichungstag der Anmeldung: 22.07.2020
(73) Patentinhaber: Joyson Safety Systems Germany GmbH, 63743 Aschaffenburg (DE)
(72) Erfinder: DIVO, Hans-Jürgen, 89129 Langenau (DE); BENZ, Jochen, 89077 Ulm (DE); GANSO, Christine-Martina, 89346 Bibertal (DE); SCHNABL, Roland, 89075 Ulm (DE); KLINGAUF, Gerhard, 88481 Balzheim (DE)
(74) Vertreter: Fischer, Uwe
(86) Internationale Anmeldenummer: PCT/DE2018/200077
(87) Internationale Veröffentlichungsnummer: WO 2019/052609

(56) Entgegenhaltungen:
- EP-A2- 0 488 937
- WO-A1-02/02375
- WO-A2-2013/075710
- DE-C1- 10 031 865

## Beschreibung

Die Erfindung bezieht sich auf einen Gasgenerator zum Erzeugen eines Antriebsgases für eine Fahrzeugsicherungseinrichtung, beispielsweise für eine Gurtstraffereinrichtung, einen Gurtaufroller und/oder einen Airbag.

Die internationale Patentanmeldung WO2013/075710 A2 offenbart einen Gasgenerator zum Erzeugen eines Antriebsgases für eine Fahrzeugsicherheitseinrichtung, wobei der Gasgenerator aufweist: eine Anzündeinrichtung, Treibstoff, der nach einem Entzünden durch die Anzündeinrichtung das Antriebsgas erzeugt, ein rohrförmiges oder zumindest abschnittsweise rohrförmiges Trägerelement, in dessen Rohrinneren sich ein Verbrennungsraum für den Treibstoff befindet und der ein Anschlussloch für die Anzündeinrichtung aufweist, ein Spritzgusskörper, der die Anzündeinrichtung in dem Anschlussloch fixiert und sich mit einem inneren Abschnitt im Inneren des Trägerelements und mit einem äußeren Abschnitt außerhalb des Trägerelements befindet, ein Zuführungsrohr, das an ein Rohrende des Trägerelements angeschlossen ist und das Antriebsgas aus dem Verbrennungsraum weiterleitet und einen den Verbrennungsraum abschließenden Deckel, der vor dem Zünden der Anzündeinrichtung den Verbrennungsraum von dem Zuführungsrohr trennt.

Der Erfindung liegt die Aufgabe zugrunde, einen Gasgenerator der oben beschriebenen Art zu verbessern.

Diese Aufgabe wird erfindungsgemäß durch einen Gasgenerator mit den Merkmalen gemäß Patentanspruch 1 gelöst. Vorteilhafte Ausgestaltungen des erfindungsgemäßen Gasgenerators sind in Unteransprüchen angegeben.

Danach ist erfindungsgemäß vorgesehen, dass der Spritzgusskörper einen hülsenförmigen Abschnitt aufweist, der an einer Innenwand des Trägerelements anliegt und sich im Trägerelement bis zu dem Deckel erstreckt, so dass der Spritzgusskörper und der Deckel den Verbrennungsraum nach außen begrenzen, das Trägerelement und das Zuführungsrohr miteinander verschraubt sind und das dem Trägerelement zugewandte Rohrende des Zuführungsrohrs den Deckel auf den der Anzündeinrichtung abgewandten, umlaufenden Hülsenrand des hülsenförmigen Abschnitts aufdrückt.

Ein Vorteil des erfindungsgemäßen Gasgenerators ist darin zu sehen, dass sich das Zuführungsrohr und das Trägerelement - bezogen auf den Drehwinkel zwischen den beiden Teilen - bei der Montage relativ zueinander verdrehen lassen und ein Wunschdrehwinkel zwischen den Teilen eingestellt werden kann, ohne dass die Dichtwirkung des Deckels, der auf dem hülsenförmigen Abschnitt aufliegt, dadurch beeinträchtigt wird. Dies liegt konkret darin, dass sich der Deckel und/oder der hülsenförmige Abschnitt beim Aufdrücken des Zuführungsrohrs zumindest geringfügig deformieren und nachgeben können. Bei einem Spritzgusskörper aus Kunststoff kann beispielsweise ein Drehwinkelbereich zwischen dem Zuführungsrohr und dem Trägerelement von bis zu ± 180 Grad erreicht werden.

Vorteilhaft ist es, wenn das Trägerelement ein Innengewinde und das Zuführungsrohr ein Außengewinde aufweist und das Außengewinde des Zuführungsrohrs in das Innengewinde des Trägerelements eingeschraubt ist.

Der Verbrennungsraum wird vorzugsweise räumlich ausschließlich durch den Spritzgusskörper und den Deckel begrenzt. Der Treibstoff wird bei dieser Variante somit vom Spritzgusskörper und dem Deckel eingeschlossen.

Mit Blick auf einen Abbau von Überdruck innerhalb des Trägerelements, insbesondere im Falle einer Fehlfunktion oder eines Fehlgebrauchs der von dem Gasgenerator gespeisten Fahrzeugsicherheitseinrichtung, wird es als vorteilhaft angesehen, wenn das Trägerelement im Bereich des Verbrennungsraumes ein radial nach außen führendes Ablassloch aufweist. Das Ablassloch ist durch einen Verschlussabschnitt des Spritzgusskörpers verschlossen und bildet mit diesem ein Ventil des Gasgenerators, das im geöffneten Zustand ein Entweichen des Antriebsgases radial nach außen ermöglicht. Der Spritzgusskörper bietet bei dieser Variante eine weitere Funktion: Er fixiert nicht nur die Anzündeinrichtung im Anschlussloch und ermöglicht die oben erläuterte Einstellmöglichkeit eines Wunschdrehwinkels zwischen dem Trägerelement und dem Zuführungsrohr, sondern er bildet darüber hinaus ein Ventil für den Fall einer Fehlfunktion oder eines Fehlgebrauchs. Es wird mit anderen Worten ein Synergieeffekt geschaffen, der auf der Erkenntnis basiert, dass ein Spritzgussmaterial zumindest etwas verformbar ist und die Drehwinkeljustage ermöglicht und darüber hinaus als Ventil fungieren kann. Das Öffnen des Ventils kann auf einem Schmelzen des Verschlussabschnitts beruhen; in diesem Falle ist das Ventil ein Schmelzventil. Alternativ oder zusätzlich kann vorgesehen sein, dass das Öffnen des Ventils auf einem zumindest abschnittsweisen Bersten des Spritzgusskörpers und einem Herausdrücken des Verschlussabschnitts beruht; in diesem Falle ist das Ventil ein Überdruckventil.

Mit Blick auf eine platzsparende Unterbringung des Gasgenerator in oder an einer Fahrzeugsicherheitseinrichtung wird es als vorteilhaft angesehen, wenn sich das Anschlussloch, an dem die Anzündeinrichtung mittels des ein- oder angespritzten Spritzgusskörpers fixiert ist, in der Außenwand eines rohrförmigen Abschnitts des Trägerelements befindet und sich der Spritzgusskörper nach außen durch das Anschlussloch entlang einer Erstreckungsrichtung erstreckt, die winklig, insbesondere rechtwinklig, zur Längsrichtung des rohrförmigen Abschnitts des Trägerelements angeordnet ist. Bei dieser Ausgestaltung können die Anzündeinrichtung und der Spritzgusskörper also beispielsweise senkrecht zum Zuführungsrohr montiert werden, wodurch sich ein besonders kompakter Aufbau der Gesamtanordnung erreichen lässt.

Bei einer anderen, ebenfalls als vorteilhaft angesehenen Ausführungsform ist vorgesehen, dass das Anschlussloch, an dem die Anzündeinrichtung mittels des ein- oder angespritzten Spritzgusskörpers fixiert ist, durch ein dem Zuführungsrohr abgewandtes Rohrende des Trägerelements gebildet. Bei dieser Variante kann das Trägerelement beispielsweise durch ein Rohr gebildet sein und ein Antriebsrohr bilden.

Bei der letztgenannten Variante ist es vorteilhaft, wenn das dem Zuführungsrohr zugewandte Rohrende des Trägerelements und das dem Zuführungsrohr abgewandte Rohrende des Trägerelements axial angeordnet sind oder fluchten.

Auch ist es vorteilhaft, wenn der Öffnungsdurchmesser des Trägerelements an dem dem Zuführungsrohr abgewandten Rohrende reduziert ist und der Spritzgusskörper in das durchmessermäßig reduzierte Rohrende des Trägerelements eingesetzt ist.

Der äußere Abschnitt des Spritzgusskörpers bildet bevorzugt einen Kontakthülsenabschnitt, der aus dem Trägerelement herausgeführte elektrische Anschlusselemente der Anzündeinrichtung außen umgibt.

Der Kontakthülsenabschnitt ist vorzugsweise derart geformt, dass er ein Schnittstellenelement zum elektrischen Kontaktieren der elektrischen Anschlusselemente der Anzündeinrichtung aufnehmen kann.

Zwischen dem inneren Abschnitt des Spritzgusskörpers und dem äußeren Abschnitt des Spritzgusskörpers ist bevorzugt ein mittlerer Abschnitt angeordnet, dessen Durchmesser kleiner als der des inneren und des äußeren Abschnitts ist.

Der Durchmesser des Anschlusslochs, an dem die Anzündeinrichtung mittels des ein- oder angespritzten Spritzgusskörpers fixiert ist, entspricht vorzugsweise dem Durchmesser des mittleren Abschnitts.

Im Falle eines Rohres als Trägerelement ist es von Vorteil, wenn der Öffnungsdurchmesser des Trägerelements an dem dem Zuführungsrohr abgewandten Rohrende reduziert ist und der Durchmesser des mittleren Abschnitts dem reduzierten Öffnungsdurchmesser des Trägerelements am Rohrende entspricht.

Ein Beispiel welches nicht Bestandteil dieser Erfindung ist bezieht sich außerdem auf einen Gasgenerator zum Erzeugen eines Antriebsgases für eine Fahrzeugsicherheitseinrichtung, wobei der Gasgenerator aufweist: eine Anzündeinrichtung, Treibstoff, der nach einem Entzünden durch die Anzündeinrichtung das Antriebsgas erzeugt, ein rohrförmiges oder zumindest abschnittsweise rohrförmiges Trägerelement, in dessen Rohrinneren sich ein Verbrennungsraum für den Treibstoff befindet und der ein Anschlussloch für die Anzündeinrichtung aufweist, ein Spritzgusskörper, der die Anzündeinrichtung in dem Anschlussloch fixiert und sich mit einem inneren Abschnitt im Inneren des Trägerelements und mit einem äußeren Abschnitt außerhalb des Trägerelements befindet, ein Zuführungsrohr, das an ein Rohrende des Trägerelements angeschlossen ist und das Antriebsgas aus dem Verbrennungsraum weiterleitet und einen den Verbrennungsraum abschließenden Deckel, der vor dem Zünden der Anzündeinrichtung den Verbrennungsraum von dem Zuführungsrohr trennt, dadurch gekennzeichnet, dass das Trägerelement im Bereich des Verbrennungsraumes ein radial nach außen führendes Ablassloch aufweist und das Ablassloch durch einen Verschlussabschnitt des Spritzgusskörpers verschlossen ist und mit diesem ein Ventil des Gasgenerators bildet, das im geöffneten Zustand ein Entweichen des Antriebsgases radial nach außen ermöglicht. Bezüglich vorteilhafter Ausgestaltungen dieser Erfindung gelten die obigen Ausführungen entsprechend; die oben aufgeführten Merkmale können in vorteilhafter Weise also auch bei dieser Erfindung eingesetzt werden.

Ein weiteres Beispiel welches nicht Bestandteil dieser Erfindung ist bezieht sich auf einen Gasgenerator zum Erzeugen eines Antriebsgases für eine Fahrzeugsicherheitseinrichtung, wobei der Gasgenerator aufweist: eine Anzündeinrichtung, Treibstoff, der nach einem Entzünden durch die Anzündeinrichtung das Antriebsgas erzeugt, ein rohrförmiges oder zumindest abschnittsweise rohrförmiges Trägerelement, in dessen Rohrinneren sich ein Verbrennungsraum für den Treibstoff befindet und der ein Anschlussloch für die Anzündeinrichtung aufweist, ein Spritzgusskörper, der die Anzündeinrichtung in dem Anschlussloch fixiert und sich mit einem inneren Abschnitt im Inneren des Trägerelements und mit einem äußeren Abschnitt außerhalb des Trägerelements befindet, ein Zuführungsrohr, das an ein Rohrende des Trägerelements angeschlossen ist und das Antriebsgas aus dem Verbrennungsraum weiterleitet und einen den Verbrennungsraum abschließenden Deckel, der vor dem Zünden der Anzündeinrichtung den Verbrennungsraum von dem Zuführungsrohr trennt, dadurch gekennzeichnet, dass sich das Anschlussloch, an dem die Anzündeinrichtung mittels eines ein- oder angespritzten Spritzgusskörpers fixiert ist, in der Außenwand eines rohrförmigen Abschnitts des Trägerelements befindet und sich der Spritzgusskörper nach außen durch das Anschlussloch entlang einer Erstreckungsrichtung erstreckt, die winklig, insbesondere rechtwinklig, zur Längsrichtung des rohrförmigen Abschnitts des Trägerelements angeordnet ist. Bezüglich vorteilhafter Ausgestaltungen dieser Erfindung gelten die obigen Ausführungen entsprechend; die oben aufgeführten Merkmale können in vorteilhafter Weise also auch bei dieser Erfindung eingesetzt werden.

Die Erfindung wird nachfolgend anhand von Ausführungsbeispielen näher erläutert; dabei zeigen beispielhaft
- Figur 1: ein Ausführungsbeispiel für einen erfindungsgemäßen Gasgenerator im Querschnitt,
- Figur 2: ein Ausführungsbeispiel für einen erfindungsgemäßen Gasgenerator, der zusätzlich mit einem Ventil ausgestattet ist,
- Figur 3: ein Ausführungsbeispiel für einen erfindungsgemäßen Gasgenerator, bei dem eine Anzündeinrichtung nicht axial angeordnet ist, wie bei den Ausführungsbeispielen gemäß den Figuren 1 und 2, sondern radial, und
- Figur 4: das Ausführungsbeispiel gemäß Figur 3 mit einem zusätzlichen Ventil.

In den Figuren werden der Übersicht halber für identische oder vergleichbare Komponenten stets dieselben Bezugszeichen verwendet.

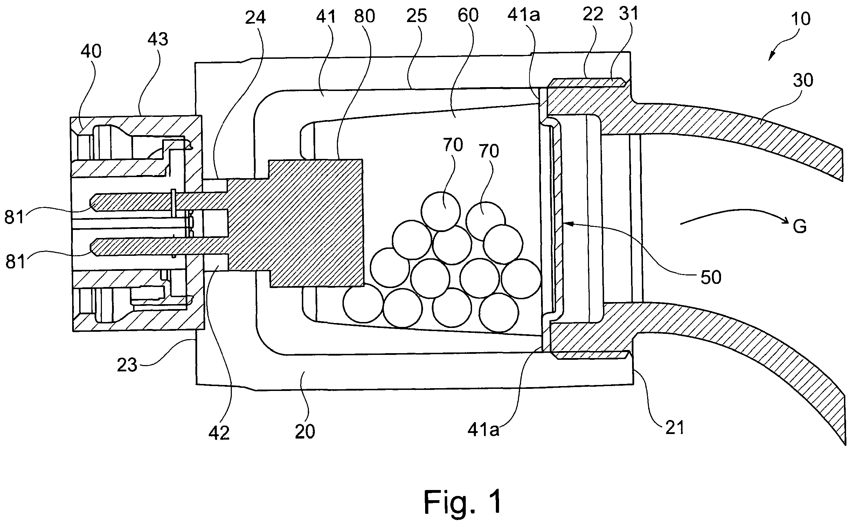

Die Figur 1 zeigt einen Gasgenerator 10 im Querschnitt. Man erkennt ein rohrförmiges Trägerelement, das durch ein Antriebsrohr 20 gebildet ist. An ein in der Figur 1 rechtes Rohrende 21 des Antriebsrohres 20 ist ein Zuführungsrohr 30 des Gasgenerators 10 angeschraubt. Vorteilhaft ist es, wenn im Bereich des Rohrendes 21 des Antriebsrohrs 20 ein Innengewinde 22 eingeschnitten bzw. vorgesehen ist, in das ein Außengewinde 31 des Zuführungsrohres 30 eingeschraubt ist.

Das in der Figur 1 linke, also dem Zuführungsrohr 30 abgewandte Rohrende 23 des Antriebsrohrs 20 ist im Durchmesser reduziert, beispielsweise durch plastische Umformung. Das Rohrende 23 des Antriebsrohrs 20 bildet ein Anschlussloch 24, in das ein Spritzgusskörper 40 ein- oder angespritzt ist.

Der Spritzgusskörper 40 weist einen hülsenförmigen Abschnitt 41 auf, der im Inneren des Antriebsrohrs 20 angeordnet ist. Der hülsenförmige Abschnitt 41 liegt an einer Innenwand 25 des Antriebsrohrs 20 an und erstreckt sich im Antriebsrohr 20 von dem Anschlussloch 24 bis zu einem Deckel 50. Der Deckel 50 liegt auf einem umlaufenden Hülsenrand 41a des hülsenförmigen Abschnitts 41 des Spritzgusskörpers 40 auf.

Die Figur 1 lässt erkennen, dass der Deckel 50 zwischen dem Hülsenrand 41a des hülsenförmigen Abschnitts 41 und dem Zuführungsrohr 30 derart angeordnet ist, dass das mit dem Antriebsrohr 20 verschraubte Zuführungsrohr 30 den Deckel 50 auf den Hülsenrand 41a aufdrückt.

Der hülsenförmige Abschnitt 41 und der Deckel 50 begrenzen einen Verbrennungsraum 60 des Gasgenerators 10, in dem Treibstoff 70 untergebracht ist.

Der Spritzgusskörper 40 weist neben dem hülsenförmigen Abschnitt 41, der sich innerhalb des Antriebsrohrs 20 befindet, außerdem einen mittleren Abschnitt 42 sowie einen äußeren Abschnitt 43 auf. Der mittlere Abschnitt 42 erstreckt sich durch das Anschlussloch 24 des Antriebsrohrs 20 und fixiert den Spritzgusskörper 40 relativ zum Antriebsrohr 20.

Der äußere bzw. außenliegende Abschnitt 43 des Spritzgusskörpers 40 bildet einen Kontakthülsenabschnitt, der aus dem Antriebsrohr 20 herausgeführte elektrische Anschlusselemente 81 einer Anzündeinrichtung 80 von außen bzw. radial umgibt.

Die Anzündeinrichtung 80 ist abschnittsweise in den Spritzgusskörper 40 eingebettet und wird von dem Spritzgusskörper 40 innerhalb des Antriebsrohrs 20 gehalten. Die Antriebseinrichtung 80 dient dazu, den im Verbrennungsrohr 60 befindlichen Treibstoff 70 zu zünden, wenn ein elektrisches Zündsignal an die elektrischen Anschlusselemente 81 der Anzündeinrichtung 80 angelegt wird.

Bei dem Ausführungsbeispiel gemäß Figur 1 wird der Aufnahmeraum für den Treibstoff 70 bzw. der Verbrennungsraum 60 ausschließlich durch den hülsenförmigen Abschnitt 41 und den Deckel 50 begrenzt. Durch das Aufdrücken des Deckels 50 auf den Hülsenrand 41a des hülsenförmigen Abschnitts 41 durch das Zuführungsrohr 30 wird der Aufnahmeraum für den Treibstoff 70 bzw. der Verbrennungsraum 60 vor dem Zünden der Anzündeinrichtung 80 dicht, vorzugsweise hermetisch, verschlossen.

Da Spritzgussmaterialien wie Kunststoff oder Gießharz in der Regel zumindest geringfügig plastisch und/oder elastisch deformierbar sind, weist der Gasgenerator 10 gemäß Figur 1 den Vorteil auf, dass das Zuführungsrohr 30 beim Verschrauben mit dem Antriebsrohr 20 den Deckel 50 unter Deformation des hülsenförmigen Abschnitts 41 in Richtung des Rohrendes 23 drücken kann, so dass der Relativdrehwinkel zwischen dem Zuführungsrohr 30 und dem Antriebsrohr 20 einstellbar ist. Je nach Material des Spritzgusskörpers 40 ist ein Verdrehen des Antriebsrohrs 20 relativ zu dem Zuführungsrohr 30 von bis zu oder sogar über ± 180° möglich, ohne dass dies die Abdichtwirkung des Deckels 50 auf dem Hülsenrand 41a beeinträchtigen würde. Mit anderen Worten ist es also möglich, den Drehwinkel zwischen dem Zuführungsrohr 30 und dem Antriebsrohr 20 während der Montage des Gasgenerators 10 an oder in einer Fahrzeugsicherungseinrichtung, beispielsweise einem Gurtstraffer bzw. einem Gurtaufroller oder einer Airbageinrichtung, quasi nach Belieben einzustellen, beispielsweise um die elektrischen Anschlusselemente 81 relativ zu einem externen elektrischen Stecker oder einer externen elektrischen Buchse (nicht dargestellt in der Figur 1) auszurichten, ohne dabei die Abdichtwirkung des Deckels 50 auf dem Hülsenrand 41a zu beeinträchtigen.

Der Gasgenerator 10 arbeitet vorzugsweise wie folgt:
Im Falle eines Anliegens eines Zündsignals an den elektrischen Anschlusselementen 81 wird die Anzündeinrichtung 80 gezündet, die daraufhin den im Verbrennungsraum 60 befindlichen Treibstoff 70 zündet. Der entzündete Treibstoff 70 erzeugt ein Antriebsgas G, das den Druck innerhalb des Verbrennungsraums 60 abrupt erhöht und zu einem Aufreißen des Deckels 50 führt. Das Antriebsgas G kann somit durch den aufgeborstenen Deckel 50 das Antriebsrohr 20 verlassen und von dem Zuführungsrohr 30 weitergeleitet werden, sei es zu einer Gurtstraffeinrichtung, einem Gurtaufroller und/oder einer Airbageinrichtung.

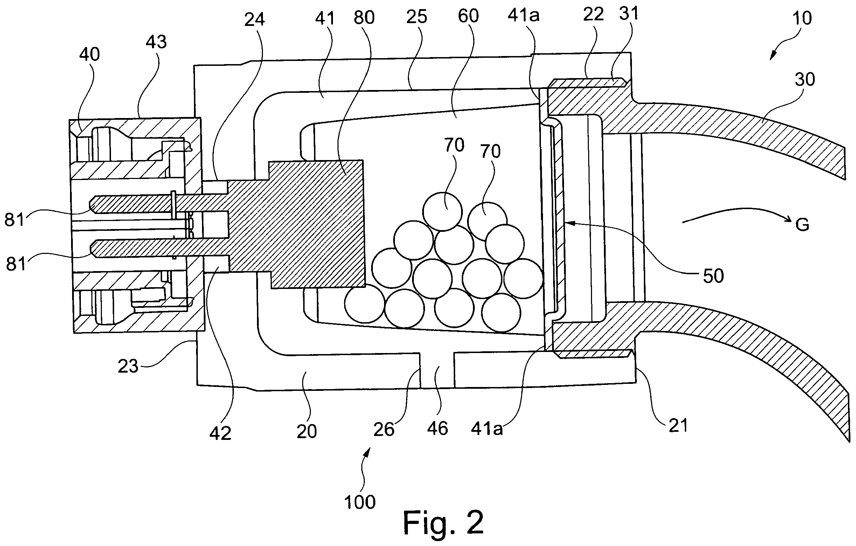

Die Figur 2 zeigt ein Ausführungsbeispiel für einen Gasgenerator 10, der vom inneren Aufbau her im Wesentlichen dem Gasgenerator 10 gemäß Figur 1 entspricht. Im Unterschied zu dem Ausführungsbeispiel gemäß Figur 1 weist das Antriebsrohr 20 des Gasgenerators 10 gemäß Figur 2 im Bereich des Verbrennungsraums 60 ein radial nach außen führendes Ablassloch 26 auf, das durch einen Verschlussabschnitt 46 des Spritzgusskörpers 40 verschlossen ist. Der Verschlussabschnitt 46 des Spritzgusskörpers 40 bildet gemeinsam mit dem Ablassloch 26 im Antriebsrohr 20 ein Ventil 100 des Gasgenerators 10, das im geöffneten bzw. geschmolzenen Zustand des Verschlussabschnitts 46 ein Entweichen des Antriebsgases G radial nach außen ermöglicht.

Das Ventil 100 bzw. der im Ablassloch 26 befindliche Verschlussabschnitt 46 werden schmelzen und das Ablassloch 26 freigeben, wenn ein Ableiten des Antriebsgases G aus dem Antriebsrohr 20 - aus welchen Gründen auch immer - blockiert ist und sich das heiße Antriebsgas G im Verbrennungsraum 60 staut. Alternativ oder zusätzlich kann allein durch Überdruck der Verschlussabschnitt 46 vom übrigen Spritzgusskörper 40 abbrechen und aus dem Ablassloch 26 herausgedrückt werden.

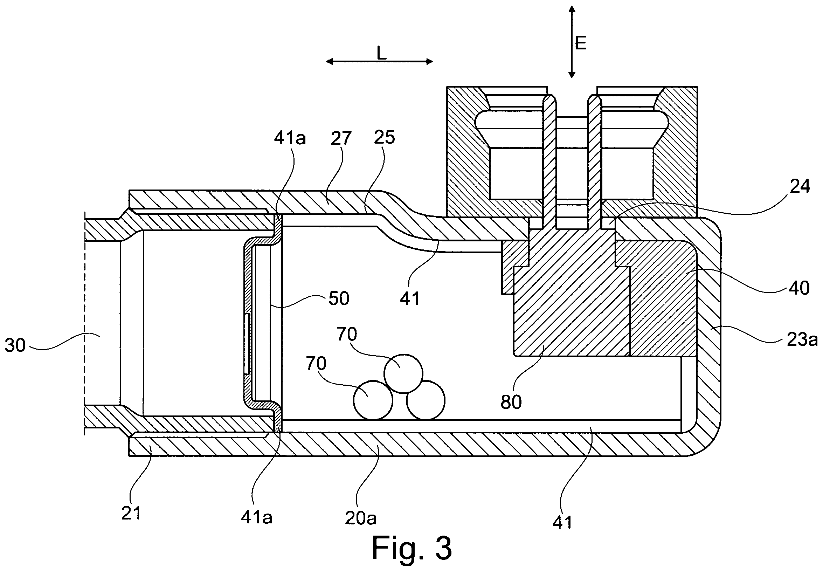

Die Figur 3 zeigt ein Ausführungsbeispiel für einen Gasgenerator 10, der vom Aufbau her im Wesentlichen dem Gasgenerator 10 gemäß Figur 1 entspricht. Im Unterschied zu dem Ausführungsbeispiel gemäß Figur 1 ist bei dem Ausführungsbeispiel gemäß Figur 3 das Trägerelement, das mit dem Bezugszeichen 20a gekennzeichnet ist, nicht durchgängig rohrförmig, sondern nur abschnittsweise rohrförmig. Das Trägerelement 20a ist im Bereich des dem Zuführungsrohr 30 abgewandten Endes 23a verschlossen. Das abschnittsweise rohrförmige Trägerelement 20a kann beispielsweise durch plastisches Umformen eines Ausgangsrohres gebildet werden, das derart umgeformt wird, dass - wie gezeigt - das Anschlussloch 24 für den Spritzgusskörper 40 nicht mehr axial mit dem Rohrende 21 fluchtet, sondern radial an der Außenwand 27 des rohrförmigen Abschnitts des Trägerelements 20 liegt.

Alternativ kann das in der Figur 3 gezeigte, nur abschnittsweise rohrförmige Trägerelement 20a auch ein topfförmiges Element, vorzugsweise aus Metall, sein, das durch Tiefziehen oder Gießen hergestellt worden ist. Die umlaufende Topfwand bildet dann einen rohrförmigen Abschnitt des Trägerelements und ein Rohrende 21 des rohrförmigen Abschnitts liegt dem Topfboden in axialer Richtung gegenüber.

Bei dem Ausführungsbeispiel gemäß der Figur 3 ist der ein- oder angespritzte Spritzgusskörper 40 somit nicht axial zur Rohrlängsrichtung L des rohrförmigen Abschnitts des Trägerelements 20a oder axial zur Längsrichtung des Zuführungsrohrs 30 (im Anschlussbereich an das Antriebsrohr 20) angeordnet, sondern rechtwinklig dazu. Mit anderen Worten erstreckt sich die Erstreckungsrichtung E des Spritzgusskörpers 40 und damit die der Anzündeinrichtung 80 rechtwinklig zur Längsrichtung L des rohrförmigen Abschnitts des Trägerelements 20a.

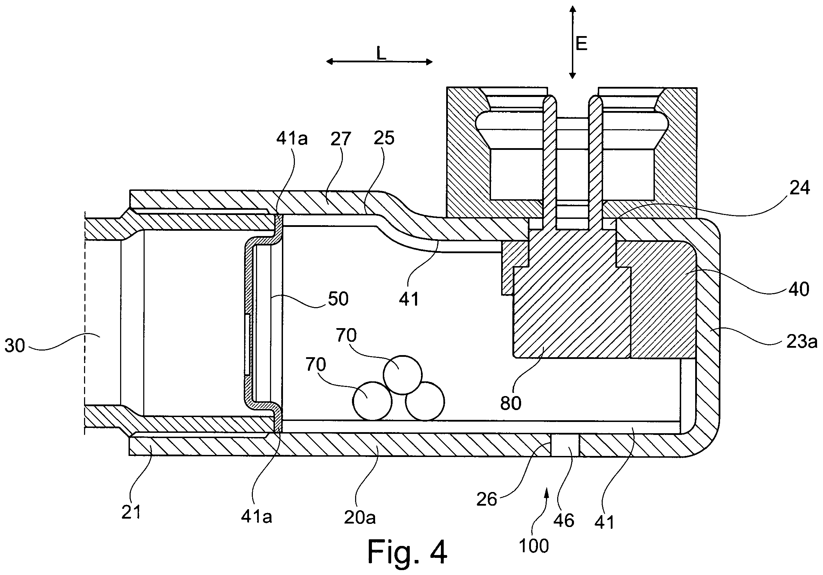

Ein Ventil wie beispielsweise das Ventil 100 gemäß Figur 2 kann auch bei der winkligen Ausführungsform gemäß Figur 3 vorgesehen sein. Eine solche Ausgestaltung zeigt die Figur 4.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Gasgenerator
- 20: Antriebsrohr
- 20a: Trägerelement
- 21: Rohrende
- 22: Innengewinde
- 23: Rohrende
- 23a: abgewandtes Ende
- 24: Anschlussloch
- 25: Innenwand
- 26: Ablassloch
- 27: Außenwand
- 30: Zuführungsrohr
- 31: Außengewinde
- 40: Spritzgusskörper
- 41: Abschnitt
- 41a: Hülsenrand
- 42: Abschnitt
- 43: Abschnitt
- 46: Verschlussabschnitt
- 50: Deckel
- 60: Verbrennungsraum
- 70: Treibstoff
- 80: Anzündeinrichtung
- 81: Anschlusselemente
- 100: Ventil

- E: Erstreckungsrichtung
- G: Antriebsgas
- L: Längsrichtung

## Patentansprüche

1. Gasgenerator (10) zum Erzeugen eines Antriebsgases (G) für eine Fahrzeugsicherheitseinrichtung, wobei der Gasgenerator (10) aufweist:
- eine Anzündeinrichtung (80),
- Treibstoff (70), der nach einem Entzünden durch die Anzündeinrichtung (80) das Antriebsgas (G) erzeugt,
- ein rohrförmiges oder zumindest abschnittsweise rohrförmiges Trägerelement (20, 20a), in dessen Rohrinneren sich ein Verbrennungsraum (60) für den Treibstoff (70) befindet und der ein Anschlussloch (24) für die Anzündeinrichtung (80) aufweist,
- ein Spritzgusskörper (40), der die Anzündeinrichtung (80) in dem Anschlussloch (24) fixiert und sich mit einem inneren Abschnitt im Inneren des Trägerelements (20, 20a) und mit einem äußeren Abschnitt (43) außerhalb des Trägerelements (20, 20a) befindet,
- ein Zuführungsrohr (30), das an ein Rohrende (21) des Trägerelements (20, 20a) angeschlossen ist und das Antriebsgas (G) aus dem Verbrennungsraum (60) weiterleitet, und
- einen den Verbrennungsraum (60) abschließenden Deckel (50), der vor dem Zünden der Anzündeinrichtung (80) den Verbrennungsraum (60) von dem Zuführungsrohr (30) trennt, **dadurch gekennzeichnet, dass**
- der Spritzgusskörper (40) einen hülsenförmigen Abschnitt (41) aufweist, der an einer Innenwand (25) des Trägerelements (20, 20a) anliegt und sich im Trägerelement (20, 20a) bis zu dem Deckel (50) erstreckt, so dass der Spritzgusskörper (40) und der Deckel (50) den Verbrennungsraum (60) nach außen begrenzen,
- das Trägerelement (20, 20a) und das Zuführungsrohr (30) miteinander verschraubt sind und
- das dem Trägerelement (20, 20a) zugewandte Rohrende des Zuführungsrohrs (30) den Deckel (50) auf den der Anzündeinrichtung (80) abgewandten, umlaufenden Hülsenrand (41a) des hülsenförmigen Abschnitts (41) aufdrückt.

2. Gasgenerator (10) nach Anspruch 1,
**dadurch gekennzeichnet, dass**
das Trägerelement (20, 20a) ein Innengewinde (22) und das Zuführungsrohr (30) ein Außengewinde (31) aufweist und das Außengewinde (31) des Zuführungsrohrs (30) in das Innengewinde (22) des Trägerelements (20, 20a) eingeschraubt ist.

3. Gasgenerator (10) nach einem der voranstehenden Ansprüche, **dadurch gekennzeichnet, dass**
der Verbrennungsraum (60) räumlich ausschließlich durch den Spritzgusskörper (40) und den Deckel (50) begrenzt wird.

4. Gasgenerator (10) nach einem der voranstehenden Ansprüche, **dadurch gekennzeichnet, dass**
- das Trägerelement (20, 20a) im Bereich des Verbrennungsraums (60) ein radial nach außen führendes Ablassloch (26) aufweist und
- das Ablassloch (26) durch einen Verschlussabschnitt (26) des Spritzgusskörpers (40) verschlossen ist und mit diesem ein Ventil (100) des Gasgenerators (10) bildet, das im geöffneten Zustand ein Entweichen des Antriebsgases (G) radial nach außen ermöglicht.

5. Gasgenerator (10) nach einem der voranstehenden Ansprüche, **dadurch gekennzeichnet, dass**
sich das Anschlussloch (24), an dem die Anzündeinrichtung (80) mittels des ein- oder angespritzten Spritzgusskörpers (40) fixiert ist, in der Außenwand (27) eines rohrförmigen Abschnitts des Trägerelements (20, 20a) befindet und sich der Spritzgusskörper (40) nach außen durch das Anschlussloch (24) entlang einer Erstreckungsrichtung (E) erstreckt, die winklig, insbesondere rechtwinklig, zur Längsrichtung (L) des rohrförmigen Abschnitts des Trägerelements (20, 20a) angeordnet ist.

6. Gasgenerator (10) nach einem der voranstehenden Ansprüche, **dadurch gekennzeichnet, dass**
das Anschlussloch (24), an dem die Anzündeinrichtung (80) mittels des ein- oder angespritzten Spritzgusskörpers (40) fixiert ist, durch ein dem Zuführungsrohr (30) abgewandtes Rohrende (23) des Trägerelements (20, 20a) gebildet ist.

7. Gasgenerator (10) nach Anspruch 6,
**dadurch gekennzeichnet, dass**
das dem Zuführungsrohr (30) zugewandte Rohrende (21) des Trägerelements (20, 20a) und das dem Zuführungsrohr (30) abgewandte Rohrende (23) des Trägerelements (20, 20a) axial angeordnet sind oder fluchten.

8. Gasgenerator (10) nach einem der voranstehenden Ansprüche 6 bis 7,
**dadurch gekennzeichnet, dass**
- der Öffnungsdurchmesser des Trägerelements (20, 20a) an dem dem Zuführungsrohr (30) abgewandten Rohrende (23) reduziert ist und
- der Spritzgusskörper (40) in das durchmessermäßig reduzierte Rohrende des Trägerelements (20, 20a) eingesetzt ist.

9. Gasgenerator (10) nach einem der voranstehenden Ansprüche, **dadurch gekennzeichnet, dass**
der äußere Abschnitt (43) des Spritzgusskörpers (40) einen Kontakthülsenabschnitt bildet, der aus dem Trägerelement (20, 20a) herausgeführte elektrische Anschlusselemente (81) der Anzündeinrichtung (80) außen umgibt.

10. Gasgenerator (10) nach Anspruch 9,
**dadurch gekennzeichnet, dass**
der Kontakthülsenabschnitt derart geformt ist, dass er ein elektrisches Schnittstellenelement zum elektrischen Kontaktieren der elektrischen Anschlusselemente (81) der Anzündeinrichtung (80) aufnehmen kann.

11. Gasgenerator (10) nach einem der voranstehenden Ansprüche,
**dadurch gekennzeichnet, dass**
zwischen dem inneren Abschnitt des Spritzgusskörpers (40) und dem äußeren Abschnitt des Spritzgusskörpers (40) ein mittlerer Abschnitt (42) angeordnet ist, dessen Durchmesser kleiner als der des inneren und des äußeren Abschnitts ist.

12. Gasgenerator (10) nach Anspruch 11,
**dadurch gekennzeichnet, dass**
der Durchmesser des Anschlusslochs (24), an dem die Anzündeinrichtung (80) mittels eines ein- oder angespritzten Spritzgusskörpers (40) fixiert ist, dem Durchmesser des mittleren Abschnitts (42) entspricht.

13. Gasgenerator (10) nach Anspruch 11 oder 12,
**dadurch gekennzeichnet, dass**
der Öffnungsdurchmesser des Trägerelements (20, 20a) an dem dem Zuführungsrohr (30) abgewandten Rohrende reduziert ist und der Durchmesser des mittleren Abschnitts (42) dem reduzierten Öffnungsdurchmesser des Trägerelements (20, 20a) am Rohrende entspricht.

## Claims

1. Gas generator (10) for generating a driving gas (G) for a vehicle safety device, wherein the gas generator (10) comprises:
- an ignition device (80),
- fuel (70) which, after ignition by the ignition device (80), generates the driving gas (G),
- a tubular or at least partially tubular carrier element (20, 20a), the tube interior of which contains a combustion chamber (60) for the fuel (70), and which has a connection hole (24) for the ignition device (80),
- an injection-molded body (40) which fixes the ignition device (80) in the connection hole (24) and is situated with an inner portion inside the carrier element (20, 20a) and with an outer portion (43) outside the carrier element (20, 20a),
- a supply pipe (30) which is connected to a tube end (21) of the carrier element (20, 20a) and conducts the driving gas (G) out of the combustion chamber (60), and
- a lid (50) which seals the combustion chamber (60) and which, before ignition of the ignition device (80), separates the combustion chamber (60) from the supply pipe (30),
**characterized in that**
- the injection-molded body (40) has a sleeve-like portion (41) which lies against an inner wall (25) of the carrier element (20, 20a) and extends inside the carrier element (20, 20a) up to the lid (50), so that the injection-molded body (40) and the lid (50) delimit the combustion chamber (60) towards the outside,
- the carrier element (20, 20a) and the supply pipe (30) are screwed together, and
- the pipe end of the supply pipe (30) facing the carrier element (20, 20a) presses the lid (50) onto the circumferential sleeve edge (41a) of the sleeve-like portion (41) remote from the ignition device (80).

2. Gas generator (10) according to Claim 1,
**characterized in that**
the carrier element (20, 20a) has an internal thread (22) and the supply pipe (30) has an external thread (31), and the external thread (31) of the supply pipe (30) is screwed into the internal thread (22) of the carrier element (20, 20a).

3. Gas generator (10) according to either of the preceding claims,
**characterized in that**
the combustion chamber (60) is delimited spatially exclusively by the injection-molded body (40) and the lid (50) .

4. Gas generator (10) according to any of the preceding claims,
**characterized in that**
- the carrier element (20, 20a) has a drainage hole (26) leading radially towards the outside in the region of the combustion chamber (60), and
- the drainage hole (26) is closed by a closure portion (26) of the injection-molded body (40) and together therewith forms a valve (100) of the gas generator (10) which, in the open state, allows the driving gas (G) to escape radially towards the outside.

5. Gas generator (10) according to any of the preceding claims,
**characterized in that**
the connection hole (24), at which the ignition device (80) is fixed by means of the inserted or attached injection-molded body (40), is situated in the outer wall (27) of a tubular portion of the carrier element (20, 20a), and the injection-molded body (40) extends outwardly through the connection hole (24) in an extension direction (E) which is arranged at an angle, in particular a right angle, to the longitudinal direction (L) of the tubular portion of the carrier element(20, 20a).

6. Gas generator (10) according to any of the preceding claims,
**characterized in that**
the connection hole (24), at which the ignition device (80) is fixed by means of the inserted or attached injection-molded body (40), is formed by a tube end (23) of the carrier element (20, 20a) remote from the supply pipe (30).

7. Gas generator (10) according to Claim 6,
**characterized in that**
the tube end (21) of the carrier element (20, 20a) facing the supply pipe (30), and the tube end (23) of the carrier element (20, 20a) remote from the supply pipe (30) are axially arranged or are aligned.

8. Gas generator (10) according to any of the preceding Claims 6 to 7,
**characterized in that**
- the opening diameter of the carrier element (20, 20a) is reduced at the tube end (23) remote from the supply pipe (30), and
- the injection-molded body (40) is inserted in the tube end of the carrier element (20, 20a) with reduced diameter.

9. Gas generator (10) according to any of the preceding claims,
**characterized in that**
the outer portion (43) of the injection-molded body (40) forms a contact sleeve portion which outwardly surrounds electrical connection elements (81) of the ignition device (80) which are guided out of the carrier element (20, 20a).

10. Gas generator (10) according to Claim 9,
**characterized in that**
the contact sleeve portion is formed such that it can receive an electrical interface element for electrical contacting of the electrical connection elements (81) of the ignition device (80).

11. Gas generator (10) according to any of the preceding claims,
**characterized in that**
a middle portion (42) is arranged between the inner portion of the injection-molded body (40) and the outer portion of the injection-molded body (40), the diameter of the middle portion being smaller than that of the inner and outer portions.

12. Gas generator (10) according to Claim 11,
**characterized in that**
the diameter of the connection hole (24), at which the ignition device (80) is fixed by means of an inserted or attached injection-molded body (40), corresponds to the diameter of the middle portion (42).

13. Gas generator (10) according to Claim 11 or 12, **characterized in that**
the opening diameter of the carrier element (20, 20a) is reduced at the tube end remote from the supply pipe (30), and the diameter of the middle portion (42) corresponds to the reduced opening diameter of the carrier element (20, 20a) at the tube end.

## Revendications

1. Générateur de gaz (10) destiné à générer un gaz d'entraînement (G) à destination d'un dispositif de sécurité de véhicule, le générateur de gaz (10) comportant :
- un dispositif d'allumage (80),
- un combustible (70) qui, après avoir été allumé par le dispositif d'allumage (80), génère le gaz d'entraînement (G),
- un élément porteur {20, 20a) tubulaire ou au moins partiellement tubulaire, à l'intérieur duquel se trouve une chambre de combustion (60) destiné au combustible (70) et qui comporte un trou de raccordement (24) destiné au dispositif d'allumage (80),
- un corps moulé par injection (40) qui fixe le dispositif d'allumage (80) dans le trou de raccordement (24) et qui comporte une portion intérieure située à l'intérieur de l'élément porteur (20, 20a) et une portion extérieure (43) située à l'extérieur de l'élément porteur (20, 20a),
- un tube d'alimentation (30) qui est raccordé à une extrémité de tube (21} de l'élément porteur (20, 20a) et qui transfère le gaz d'entraînement (G) depuis la chambre de combustion (60), et
- un couvercle (50) qui ferme la chambre de combustion (60) et qui sépare la chambre de combustion (60) du tube d'alimentation (30) avant l'allumage du dispositif d'allumage (80),
**caractérisé en ce que**
- le corps moulé par injection (40) comporte une portion (41) en forme de manchon qui vient en appui sur une paroi intérieure (25) de l'élément porteur (20, 20a) et qui s'étend dans l'élément porteur (20, 20a) jusqu'au couvercle (50) de sorte que le corps moulé par injection (40) et le couvercle (50) délimitent la chambre de combustion (60) par rapport à l'extérieur,
- l'élément porteur (20, 20a) et le tube d'alimentation (30) sont vissés l'un à l'autre et
- l'extrémité du tuyau d'alimentation (30), qui est dirigée vers l'élément porteur (20, 20a), presse le couvercle (50) sur le bord de manchon circonférentiel (41a), opposé au dispositif d'allumage (80), de la portion (41) en forme de manchon.

2. Générateur de gaz (10) selon la revendication 1, **caractérisé en ce que**
l'élément porteur (20, 20a) comporte un filetage intérieur (22) et le tube d'alimentation (30) comporte un filetage extérieur (31) et le filetage extérieur (31) du tube d'alimentation (30) est vissé dans le filetage intérieur (22) de l'élément porteur (20, 20a).

3. Générateur de gaz (10) selon l'une des revendications précédentes,
**caractérisé en ce que**
la chambre de combustion (60) est délimitée spatialement exclusivement par le corps moulé par injection (40) et le couvercle (50).

4. Générateur de gaz (10) selon l'une des revendications précédentes,
**caractérisé en ce que**
- l'élément porteur (20, 20a) comporte dans la région de la chambre de combustion (60) un trou d'évacuation (26) qui débouche radialement à l'extérieur et
- le trou d'évacuation (26) est fermé par une portion de fermeture (26) du corps moulé par injection (40) et forme avec celle-ci une vanne (100) du générateur de gaz (10) qui, lorsqu'elle est ouverte, permet au gaz d'entraînement (G) de s'échapper radialement vers l'extérieur.

5. Générateur de gaz (10) selon l'une des revendications précédentes,
**caractérisé en ce que**
le trou de raccordement (24), auquel le dispositif d'allumage (80) est fixé au moyen du corps moulé par injection (40) qui a été injecté ou surmoulé, est ménagé dans la paroi extérieure (27) d'une portion tubulaire de l'élément porteur (20, 20a) et le corps moulé par injection (40) s'étend vers l'extérieur à travers le trou de raccordement (24) le long d'une direction d'extension (E) qui est inclinée, en particulier à angle droit, par rapport à la direction longitudinale (L) de la portion tubulaire de l'élément porteur (20, 20a).

6. Générateur de gaz (10) selon l'une des revendications précédentes,
**caractérisé en ce que**
le trou de raccordement (24), auquel le dispositif d'allumage (80) est fixé au moyen du corps moulé par injection (40) qui a été injecté ou surmoulé, est formé par une extrémité de tube (23), opposée au tube d'alimentation (30), de l'élément porteur (20, 20a).

7. Générateur de gaz (10) selon la revendication 6, **caractérisé en ce que**
l'extrémité de tube (21), dirigée vers le tube d'alimentation (30), de l'élément porteur (20, 20a) et l'extrémité de tube (23), opposée au tube d'alimentation (30), de l'élément porteur (20, 20a) sont disposées axialement ou alignées.

8. Générateur de gaz (10) selon l'une des revendications 6 à 7 précédentes,
**caractérisé en ce que**
- le diamètre d'ouverture de l'élément porteur (20, 20a) est réduit à l'extrémité de tube (23) opposée au tube d'alimentation (30) et
- le corps moulé par injection (40) est inséré dans l'extrémité de tube, de diamètre réduit, de l'élément porteur (20, 20a).

9. Générateur de gaz (10) selon l'une des revendications précédentes,
**caractérisé en ce que**
la portion extérieure (43) du corps moulé par injection (40) forme une portion de manchon de contact qui entoure extérieurement des éléments de raccordement électrique (81) du dispositif d'allumage (80) qui sont sortis de l'élément porteur (20, 20a).

10. Générateur de gaz (10) selon la revendication 9, **caractérisé en ce que**
la portion de manchon de contact est formée de manière à pouvoir recevoir un élément d'interface électrique destiné à établir un contact électrique avec les éléments de raccordement électrique (81) du dispositif d'allumage (80).

11. Générateur de gaz (10) selon l'une des revendications précédentes,
**caractérisé en ce que**
une portion médiane (42), dont le diamètre est inférieur à celui des portions intérieure et extérieure, est disposée entre la portion intérieure du corps moulé par injection (40) et la portion extérieure du corps moulé par injection (40).

12. Générateur de gaz (10) selon la revendication 11, **caractérisé en ce que**
le diamètre du trou de raccordement (24), auquel le dispositif d'allumage (80) est fixé au moyen d'un corps moulé par injection (40), correspond au diamètre de la portion médiane (42).

13. Générateur de gaz (10) selon la revendication 11 ou 12,
**caractérisé en ce que**
le diamètre d'ouverture de l'élément porteur (20, 20a) est réduit à l'extrémité de tube qui est opposée au tube d'alimentation (30), et le diamètre de la portion médiane (42) correspond au diamètre d'ouverture réduit de l'élément porteur (20, 20a) à l'extrémité de tube.
